# EUROPEAN PATENT SPECIFICATION

(11) **EP 4 700 542 B1**
(45) Date of publication and mention of the grant of the patent: **18.11.2026**
(21) Application number: 25742814.4
(22) Date of filing: 14.05.2025
(51) Int. Cl.: G06F 1/20, G06F 1/26, H05K 7/20, G06F 1/16, H04M 1/02

(54) **ELECTRONIC DEVICE**
ELEKTRONISCHE VORRICHTUNG
DISPOSITIF ÉLECTRONIQUE

(30) Priority: 12.07.2024 KR 20240092650; 23.10.2024 KR 20240145655
(43) Date of publication of application: 25.02.2026
(73) Proprietor: Samsung Electronics Co., Ltd, Suwon-si, Gyeonggi-do 16677 (KR)
(72) Inventor: SEO, Soohyun, Suwon-si, Gyeonggi-do 16677 (KR); KIM, Beomju, Suwon-si, Gyeonggi-do 16677 (KR); NAM, Daehee, Suwon-si, Gyeonggi-do 16677 (KR); PARK, Sungchul, Suwon-si, Gyeonggi-do 16677 (KR); SUNG, Jungoh, Suwon-si, Gyeonggi-do 16677 (KR); SHIN, Yongjun, Suwon-si, Gyeonggi-do 16677 (KR)
(74) Representative: HGF
(86) International application number: PCT/KR2025/006545
(87) International publication number: WO 2026/014694

(56) References cited:
- KR-A- 20180 014 603
- KR-A- 20210 001 152
- KR-A- 20230 123 399
- KR-B1- 102 202 337
- KR-B1- 102 266 192

## Description

### [Technical Field]

The disclosure relates to an electronic device.

### [Background Art]

An electronic device may include a housing, a display, a battery, and a heat spreader. Such electronic devices are known from KR2023 0123399 A, KR102 202 337 B1, KR2021 0001152 A, KR2018 0014603 A and KR102 266 192 B1.

The housing may be formed to accommodate and support the display, the battery, and the heat spreader.

The battery and the heat spreader may be secured to the housing.

### [Disclosure of Invention]

### [Technical Solution]

According to one or more embodiments of the disclosure, an electronic device may include: a support plate comprising a first surface, a second surface opposite to the first surface, and an opening formed to penetrate the first surface and the second surface; a display to be supported at least in part by the first surface of the support plate; a battery to be supported at least in part by the second surface of the support plate, the battery including an upper surface facing the second surface of the support plate; a heat spreader to be placed between the display and the battery such that at least a portion of the heat spreader is accommodated in the opening of the support plate; a wrapping member to surround at least a portion of the battery, the wrapping member comprising a first wrapping portion adhered to the battery and a second wrapping portion not adhered to the battery; and an adhesive member configured to adhere the at least a portion of the heat spreader to a first region of the second wrapping portion.

According to one or more embodiments of the disclosure, an electronic device may include: a support plate comprising a first surface, a second surface opposite to the first surface, and an opening formed between the first surface and the second surface; a display to be supported at least in part by the first surface of the support plate; a battery to be supported at least in part by the second surface of the support plate, the battery including an upper surface facing the second surface of the support plate; a heat spreader to be placed between the display and the battery such that at least a portion of the heat spreader is accommodated in the opening of the support plate; a wrapping member to surround at least a portion of the battery, the wrapping member comprising a first wrapping portion adhered to the battery and a second wrapping portion spaced apart from the upper surface of the battery; and an adhesive member configured to adhere the at least a portion of the heat spreader to a first region of the second wrapping portion.

### [Brief Description of Drawings]

These and/or other aspects, features, and advantages of certain embodiments of the disclosure will be more apparent from the following description taken in conjunction with the accompanying drawings, in which:
FIG. 1 is a block diagram illustrating an electronic device in a network environment according to one or more embodiments of the disclosure.
FIG. 2 is a perspective view illustrating an electronic device according to one or more embodiments of the disclosure.
FIG. 3 is an exploded perspective view illustrating an electronic device according to one or more embodiments of the disclosure.
FIG. 4 is a rear view illustrating an electronic device according to one or more embodiments of the disclosure.
FIG. 5 is a view illustrating an electronic device according to one or more embodiments of the disclosure.
FIG. 6 is a rear view illustrating a state in which a battery is separated from the electronic device of FIG. 5.
FIG. 7 is a view for explaining a dimensional relationship of an electronic device according to one or more embodiments of the disclosure.
FIG. 8 is a view illustrating an electronic device according to one or more embodiments of the disclosure.
FIG. 9 is a view illustrating an electronic device according to one or more embodiments of the disclosure performing a 45 degree rearward drop test.
FIG. 10 is a view illustrating an electronic device according to one or more embodiments of the disclosure performing a bottom-side drop test.
FIG. 11 is a view illustrating an electronic device according to one or more embodiments of the disclosure performing a rear drop test.
FIG. 12 is a view illustrating an electronic device according to one or more embodiments of the disclosure.
FIG. 13 is a view illustrating an electronic device according to one or more embodiments of the disclosure.
FIG. 14 is a view illustrating an electronic device according to one or more embodiments of the disclosure.
FIG. 15 is a view illustrating an electronic device according to one or more embodiments of the disclosure.
FIG. 16 is a view illustrating an electronic device according to one or more embodiments of the disclosure.
FIG. 17 is a view illustrating an electronic device according to one or more embodiments of the disclosure.
FIG. 18 is a view illustrating an electronic device according to one or more embodiments of the disclosure.

### [Best Mode for Carrying out the Invention]

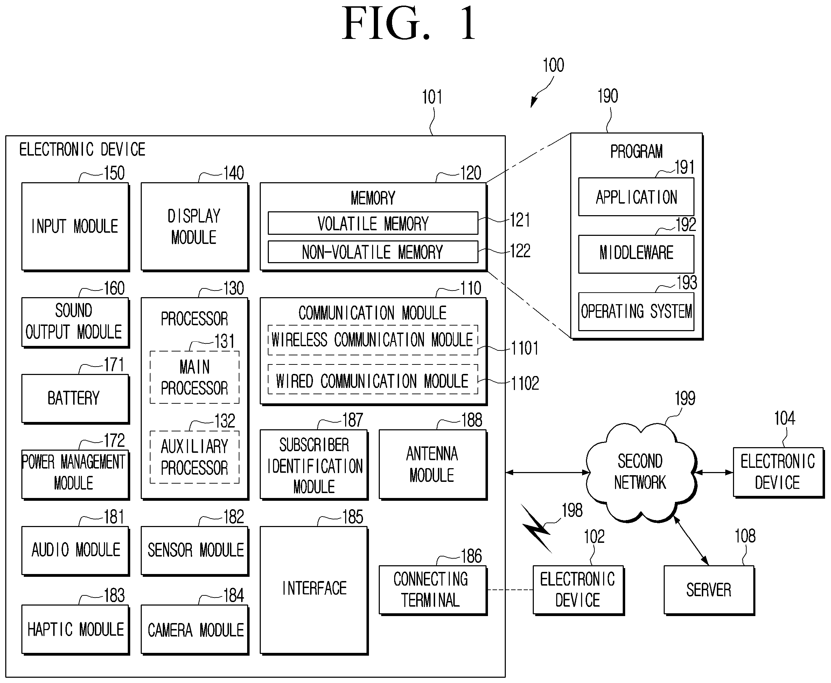

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 130, memory 120, an input module 150, a sound output module 160, a display module 140, an audio module 181, a sensor module 182, an interface 185, a connecting terminal 186, a haptic module 183, a camera module 184, a power management module 172, a battery 171, a communication module 110, a subscriber identification module (SIM) 187, or an antenna module 188. In some embodiments, at least one of the components (e.g., the connecting terminal 186) may be omitted from the electronic device 101, or one or more other components may be added in the electronic device 101. In some embodiments, some of the components (e.g., the sensor module 182, the camera module 184, or the antenna module 188) may be implemented as a single component (e.g., the display module 140).

The processor 130 may execute, for example, software (e.g., a program 190) to control at least one other component (e.g., a hardware or software component) of the electronic device 101 coupled with the processor 130, and may perform various data processing or computation. According to one embodiment, as at least part of the data processing or computation, the processor 130 may store a command or data received from another component (e.g., the sensor module 182 or the communication module 110) in volatile memory 121, process the command or the data stored in the volatile memory 121, and store resulting data in non-volatile memory 122. According to an embodiment, the processor 130 may include a main processor 131 (e.g., a central processing unit (CPU) or an application processor (AP)), or an auxiliary processor 132 (e.g., a graphics processing unit (GPU), a neural processing unit (NPU), an image signal processor (ISP), a sensor hub processor, or a communication processor (CP)) that is operable independently from, or in conjunction with, the main processor 131. For example, when the electronic device 101 includes the main processor 131 and the auxiliary processor 132, the auxiliary processor 132 may be adapted to consume less power than the main processor 131, or to be specific to a specified function. The auxiliary processor 132 may be implemented as separate from, or as part of the main processor 131.

The auxiliary processor 132 may control at least some of functions or states related to at least one component (e.g., the display module 140, the sensor module 182, or the communication module 110) among the components of the electronic device 101, instead of the main processor 131 while the main processor 131 is in an inactive (e.g., sleep) state, or together with the main processor 131 while the main processor 131 is in an active state (e.g., executing an application). According to an embodiment, the auxiliary processor 132 (e.g., an image signal processor or a communication processor) may be implemented as part of another component (e.g., the camera module 184 or the communication module 110) functionally related to the auxiliary processor 132. According to an embodiment, the auxiliary processor 132 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 120 may store various data used by at least one component (e.g., the processor 130 or the sensor module 182) of the electronic device 101. The various data may include, for example, software (e.g., the program 190) and input data or output data for a command related thererto. The memory 120 may include the volatile memory 121 or the non-volatile memory 122.

The program 190 may be stored in the memory 120 as software, and may include, for example, an operating system (OS) 193, middleware 192, or an application 191.

The input module 150 may receive a command or data to be used by another component (e.g., the processor 130) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 160 may output sound signals to the outside of the electronic device 101. The sound output module 160 may include, for example, a speaker or a receiver. The speaker may be used for general purposes, such as playing multimedia or playing recordings. The receiver may be used for receiving incoming calls. According to an embodiment, the receiver may be implemented as separate from, or as part of the speaker.

The display module 140 may visually provide information to the outside (e.g., a user) of the electronic device 101. The display module 140 may include, for example, a display, a hologram device, or a projector and control circuitry to control a corresponding one of the display, hologram device, and projector. According to an embodiment, the display module 140 may include a touch sensor adapted to detect a touch, or a pressure sensor adapted to measure the intensity of force incurred by the touch.

The audio module 181 may convert a sound into an electrical signal and vice versa. According to an embodiment, the audio module 181 may obtain the sound via the input module 150, or output the sound via the sound output module 160 or a headphone of an external electronic device (e.g., an electronic device 102) directly (e.g., wiredly) or wirelessly coupled with the electronic device 101.

The sensor module 182 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 182 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 185 may support one or more specified protocols to be used for the electronic device 101 to be coupled with the external electronic device (e.g., the electronic device 102) directly (e.g., wiredly) or wirelessly. According to an embodiment, the interface 185 may include, for example, a high definition multimedia interface (HDMI), a universal serial bus (USB) interface, a secure digital (SD) card interface, or an audio interface.

A connecting terminal 186 may include a connector via which the electronic device 101 may be physically connected with the external electronic device (e.g., the electronic device 102). According to an embodiment, the connecting terminal 186 may include, for example, a HDMI connector, a USB connector, a SD card connector, or an audio connector (e.g., a headphone connector).

The haptic module 183 may convert an electrical signal into a mechanical stimulus (e.g., a vibration or a movement) or electrical stimulus which may be recognized by a user via his tactile sensation or kinesthetic sensation. According to an embodiment, the haptic module 183 may include, for example, a motor, a piezoelectric element, or an electric stimulator.

The camera module 184 may capture a still image or moving images. According to an embodiment, the camera module 184 may include one or more lenses, image sensors, image signal processors, or flashes.

The power management module 172 may manage power supplied to the electronic device 101. According to one embodiment, the power management module 172 may be implemented as at least part of, for example, a power management integrated circuit (PMIC).

The battery 171 may supply power to at least one component of the electronic device 101. According to an embodiment, the battery 171 may include, for example, a primary cell which is not rechargeable, a secondary cell which is rechargeable, or a fuel cell.

The communication module 110 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 110 may include one or more communication processors that are operable independently from the processor 130 (e.g., the application processor (AP)) and supports a direct (e.g., wired) communication or a wireless communication. According to an embodiment, the communication module 110 may include a wireless communication module 1101 (e.g., a cellular communication module, a short-range wireless communication module, or a global navigation satellite system (GNSS) communication module) or a wired communication module 1102 (e.g., a local area network (LAN) communication module or a power line communication (PLC) module). A corresponding one of these communication modules may communicate with the external electronic device 101 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1101 may identify and authenticate the electronic device 101 in a communication network, such as the first network 198 or the second network 199, using subscriber information (e.g., international mobile subscriber identity (IMSI)) stored in the subscriber identification module 187.

The wireless communication module 1101 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module #92 may support a high-frequency band (e.g., the mmWave band) to achieve, e.g., a high data transmission rate. The wireless communication module 1101 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1101 may support various requirements specified in the electronic device 101, an external electronic device (e.g., the electronic device 104), or a network system (e.g., the second network 199). According to an embodiment, the wireless communication module 1101 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 188 may transmit or receive a signal or power to or from the outside (e.g., the external electronic device) of the electronic device 101. According to an embodiment, the antenna module 188 may include an antenna including a radiating element composed of a conductive material or a conductive pattern formed in or on a substrate (e.g., a printed circuit board (PCB)). According to an embodiment, the antenna module 188 may include a plurality of antennas (e.g., array antennas). In such a case, at least one antenna appropriate for a communication scheme used in the communication network, such as the first network 198 or the second network 199, may be selected, for example, by the communication module 110 (e.g., the wireless communication module 1101) from the plurality of antennas. The signal or the power may then be transmitted or received between the communication module 110 and the external electronic device via the selected at least one antenna. According to an embodiment, another component (e.g., a radio frequency integrated circuit (RFIC)) other than the radiating element may be additionally formed as part of the antenna module 188.

According to various embodiments, the antenna module 188 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type to, the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device 101 according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices 101 are not limited to those described above.

It should be appreciated that various embodiments of the present disclosure and the terms used therein are not intended to limit the technological features set forth herein to particular embodiments and may include various changes, equivalents, or replacements for a corresponding embodiment. The various embodiments and features thereof described in the disclosure may be combined in any manner unless incompatible. Features of embodiments may also be rearranged, omitted, or further features introduced without departing from the scope of the disclosure. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 190) including one or more instructions that are stored in a storage medium (e.g., internal memory or external memory) that is readable by a machine (e.g., the electronic device 101). For example, a processor (e.g., the processor 130) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

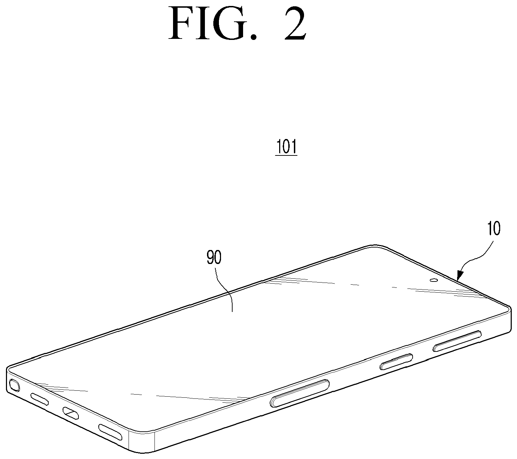

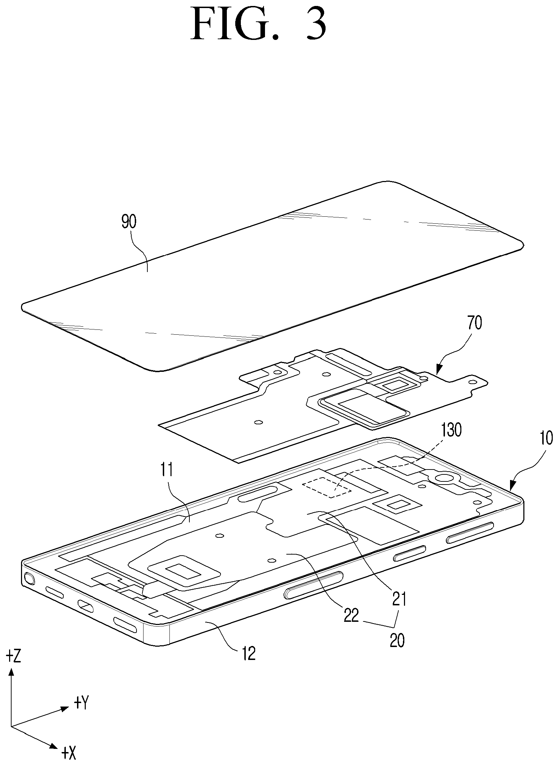

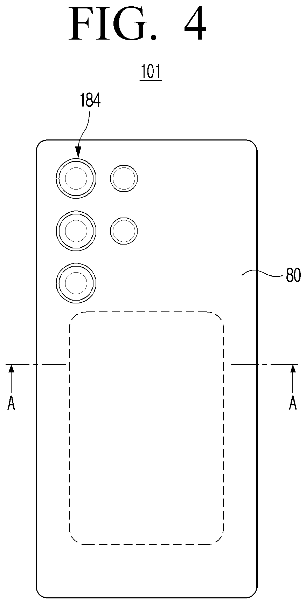

FIG. 2 is a perspective view illustrating an electronic device 101 according to one or more embodiments of the disclosure. FIG. 3 is an exploded perspective view illustrating an electronic device 101 according to one or more embodiments of the disclosure. FIG. 4 is a rear view illustrating an electronic device 101 according to one or more embodiments of the disclosure.

Referring to FIGS. 2, 3, and 4, an electronic device 101 according to one or more embodiments of the disclosure may include a housing 10 and a display 90.

The housing 10 may define a portion of an outer surface of the electronic device 101 and may include a space therein for accommodating and protecting electronic components.

For example, the housing 10 may be formed in an approximately rectangular parallelepiped (e.g. rectangular cuboid) shape.

According to one embodiment, the housing 10 may include a support plate 11 and a side member 12 surrounding a periphery of the support plate 11.

According to one embodiment, the support plate 11 may include a first surface 111 and a second surface 112 opposite to the first surface 111. For example, the support plate 11 may include an opening 113. The opening 113 may be formed to penetrate the first surface 111 and the second surface 112, such that the opening 113 forms a window through the support plate 11 from the first surface 111 to the second surface 112 or vice versa. The opening/window 113 may also be referred to as a through hole or aperture. The window may be empty or include one or more further elements and/or materials. In some examples, the opening 113 may have a stepped structure, whereby the opening 113 includes a first larger portion that does not extend completely through the support plate and second smaller portion that connects to the first larger portion and extends completely through the support plate 11. In other examples, the first larger portion may not be considered to be part of the opening 113 but instead a feature of the first surface 111 (or second surface 112), such that the first surface 111 (or second surface 112) has a stepped structure around the opening 113.

According to one embodiment, the display 90 may be positioned on the front side of the electronic device 101. For example, the display 90 may be supported at least in part by the first surface 111 of the support plate 11. The support of the display 90 may be provided by direct contact or adhesion between the first surface 111 of the support plate 11, or may be provided indirectly via one or more intermediate elements.

According to one embodiment, the display 90 may be configured to visually transmit information to the outside of the electronic device 101. For example, the display 90 may be configured to output an image. For example, the display 90 may include a touch sheet, a polarizing sheet, a first adhesive layer between the touch sheet and the polarizing sheet, a display layer, and an electromagnetic induction panel (e.g., a digitizer), and/or a heat dissipation sheet. For example, the display 90 may include a second adhesive layer disposed in front of the touch sheet, or a printed circuit board, etc.

According to one embodiment, a window may be disposed on the front side of the display 90. The window may be formed of a transparent material such that a user can view the display 90 through the window. The transparent material of the window may be used to protect the display 90.

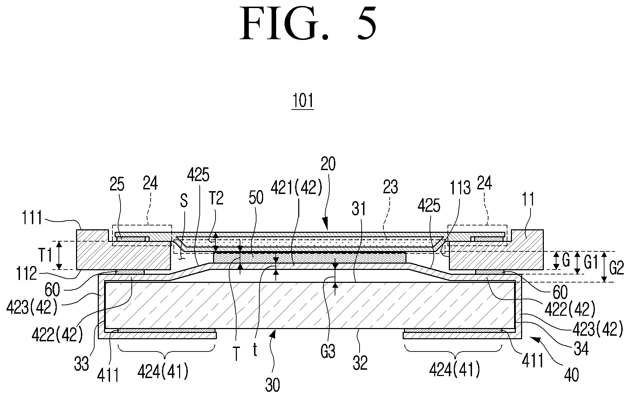

According to one embodiment, a heat spreader 20 (or heat spreading/dissipation/sink member/element) may be disposed partially or fully between the support plate 11 and the display 90. At least a portion 23 (see FIG. 5) of the heat spreader 20 may be accommodated in the opening 113 (see FIG. 5) of the support plate 11. The heat spreader 20 may be supported by the first surface 111 (see FIG. 5) of the support plate 11. For example, the remaining portion 24 (see FIG. 5) of the heat spreader 20 that is not accommodated in the opening 113 may be supported by the first surface 111 of the support plate 11. The heat spreader 20 may be supported by the first surface 111 of the support plate 11 in which the opening 113 is formed. For example, as shown in FIG. 5, the remaining portion 24 of the heat spreader 20 may be supported by a lower portion of the stepped structure of the first surface 111 (i.e. the portion of the first surface 111 that corresponds to the first larger portion of the opening 113).

According to one embodiment, the heat spreader 20 may be attached to the first surface 111 of the support plate 11. The heat spreader 20 may be attached to the first surface 111 of the support plate 11 by various methods. For example, the heat spreader 20 may be attached to the first surface 111 of the support plate 11 by a double-sided tape 25.

According to one embodiment, referring to FIG. 3, the heat spreader 20 may include a first heat spreading portion 21 and a second heat spreading portion 22. The first heat spreading portion 21 may be spaced apart from the second heat spreading portion 22. For example, when viewed from the upper side of the display 90, the first heat spreading portion 21 may be disposed to overlap a processor 130. As an example, the first heat spreading portion 21 may be disposed above the processor 130 in the +Z-axis direction. When viewed from the upper side of the display 90, the second heat spreading portion 22 may be disposed at one side (e.g., -Y-axis direction) of the first heat spreading portion 21 to overlap a battery 30 (e.g., the battery 171 of Fig. 1). As an example, the second heat spreading portion 22 may be disposed above the battery 30 in the +Z-axis direction, such that the footprints of each overlap with one another.

According to one embodiment, the second heat spreading portion 22 may include at least a portion 23 accommodated within the opening 113 of the support plate 11.

According to one embodiment, the electronic device 101 may further include a heat transfer member 70. The heat transfer member 70 may be placed between the display 90 and the support plate 11. For example, a portion of the heat transfer member 70 may overlap the heat spreader 20 disposed on the first surface 111 of the support plate 11. For example, a portion of the heat transfer member 70 may be in contact with the heat spreader 20.

According to one embodiment, the heat transfer member 70 may be configured to transfer heat generated from an electronic component to the heat spreader 20. For example, the heat transfer member 70 may be configured to transfer heat generated from the processor 130 controlling the electronic device 101 to the heat spreader 20.

According to one embodiment, the heat transfer member 70 may be formed of graphite. However, this is only an example, and the heat transfer member 70 may not be limited thereto. The heat transfer member 70 may be formed of various types of material(s) as long as it can transfer heat generated from the electronic components to the heat spreader 20.

According to one embodiment, the electronic device 101 may include a lower cover 80. The lower cover 80 may be formed to cover the lower side of the housing 10. A camera module 184 may be positioned on the lower cover 80. The camera module 184 may be accommodated in the housing 10, and a portion of the camera module 184 may be exposed to the outside through the lower cover 80.

According to one embodiment, the electronic device 101 may include a battery 30. For example, the battery 30 may be disposed on the second surface 112 of the support plate 11. The battery 30 may be placed between the support plate 11 and the lower cover 80. The battery 30 may be attached to the second surface 112 of the support plate 11.

According to one embodiment, the housing 10 may accommodate a printed circuit board and a connector disposed on the printed circuit board. For example, the printed circuit board may include a flexible printed circuit board. For example, the connector may include a flexible printed circuit board connector.

According to one embodiment, the processor 130 configured to control the electronic device 101 may be disposed on the printed circuit board. For example, the processor 130 may control the display 90, the camera module 184, etc.

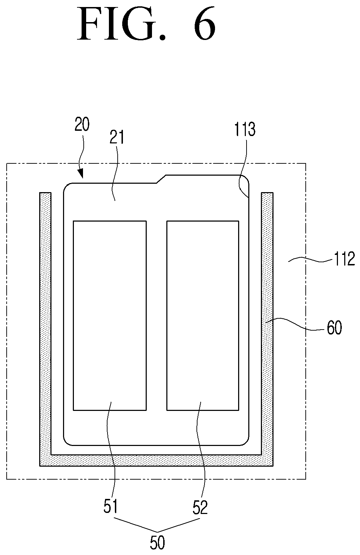

Hereinafter, with reference to FIGS. 5 and 6, the arrangement of the support plate 11, the heat spreader 20, or the battery 30 of the electronic device 101 according to one or more embodiments of the disclosure will be described in detail.

FIG. 5 is a view illustrating an electronic device 101 according to one or more embodiments of the disclosure. FIG. 6 is a rear view illustrating a state in which a battery 30 is separated from the electronic device 101 of FIG. 5.

Referring to FIG. 5, the electronic device 101 according to one or more embodiments of the disclosure may include a support plate 11, a heat spreader 20, and a battery 30. For reference, FIG. 5 shows a state in which the display 90 and the lower cover 80 are removed in a cross-sectional view taken along line A-A of FIG. 4.

According to one embodiment, the support plate 11 may include a first surface 111 and a second surface 112. The second surface 112 may be formed to be opposite to the first surface 111. For example, the support plate 11 may include an opening 113. The opening 113 may be formed to penetrate the first surface 111 and the second surface 112, for example, at approximately the center of the support plate 11.

The display 90 may be placed on the first surface 111 of the support plate 11. The battery 30 may be placed on the second surface 112 of the support plate 11.

The heat spreader 20 may be disposed on the first surface 111 of the support plate 11. The heat spreader 20 may be placed between the display 90 and the support plate 11. At least a portion 23 of the heat spreader 20 may be accommodated in the opening 113 of the support plate 11. For example, the at least a portion 23 of the heat spreader 20 may protrude into the opening 113. The at least a portion 23 of the heat spreader 20 protruding into the opening 113 may be referred to as a protruding portion. The lower surface of the protruding portion 23 may not protrude lower than the second surface 112 of the support plate 11. For example, a certain gap G may exist between the lower surface of the protruding portion 23 and the second surface 112 of the support plate 11.

The heat spreader 20 may be supported by the first surface 111 of the support plate 11. For example, a portion 24 of the heat spreader 20 that is not accommodated in the opening 113 may be supported by the first surface 111 of the support plate 11. Hereinafter, the portion 24 of the heat spreader 20 that is not accommodated in the opening 113 may be referred to as a support portion.

According to one embodiment, the support portion 24 of the heat spreader 20 may be provided around the protruding portion 23.

According to one embodiment, the heat spreader 20 may be configured as a vapor chamber. However, the heat spreader 20 is not limited thereto. The heat spreader 20 may be configured in various structures as long as it can spread heat.

The heat spreader 20 may be attached to the first surface 111 of the support plate 11. For example, the support portion 24 of the heat spreader 20 that is not accommodated in the opening 113 may be attached to the first surface 111 of the support plate 11. The support portion 24 of the heat spreader 20 may be attached to the first surface 111 of the support plate 11 by various methods. For example, the support portion 24 of the heat spreader 20 may be attached to the first surface 111 of the support plate 11 by a double-sided tape 25.

According to one embodiment, the battery 30 may be placed under the support plate 11. For example, the battery 30 may be placed on the second surface 112 of the support plate 11. The battery 30 may be supported at least in part by the second surface 112 of the support plate 11. In some examples, the support of the battery 30 may be provided by an intermediate material such that the battery 30 does not directly contact the second surface 112.

According to one embodiment, when the battery 30 is placed on the second surface 112 of the support plate 11, the upper surface 31 of the battery 30 may be spaced apart from the protruding portion 23 of the heat spreader 20 disposed in the opening 113 of the support plate 11 by a certain distance G2. Accordingly, when the battery 30 is placed on the second surface 112 of the support plate 11, a space S surrounded by the support plate 11 may be formed below the protruding portion 23 of the heat spreader 20 disposed in the opening 113 of the support plate 11.

According to one embodiment, the battery 30 may be formed in an approximately rectangular parallelepiped (e.g. rectangular cuboid) shape. For example, the battery 30 may include an upper surface 31, a lower surface 32, and a side surface. The upper surface 31 of the battery 30 may face the second surface 112 of the support plate 11. The lower surface 32 of the battery 30 may be formed to be opposite to the upper surface 31. The side surface of the battery 30 may be formed to connect the upper surface 31 and the lower surface 32 of the battery 30. For example, the side surface of the battery 30 may include four side surfaces, that is, a first side surface, a second side surface, a third side surface, and a fourth side surface. The first side surface and the third side surface may be formed to face each other, and the second side surface and the fourth side surface may be formed to face each other. For example, the first side surface and the third side surface may be formed to have a longer length than the second side surface and the fourth side surface.

According to one embodiment, a wrapping member 40 may be placed on the outer surface of the battery 30. The wrapping member 40 may be formed to separate the battery 30 from the support plate 11.

According to one embodiment, the wrapping member 40 may be formed in a thin film shape. For example, the wrapping member 40 may be formed as a film having a thickness t of about 0.02 mm. The wrapping member 40 may be formed of a plastic material such as, for example, polyethylene PE.

According to one embodiment, the wrapping member 40 may be disposed to surround at least a portion of the battery 30. For example, the wrapping member 40 may be disposed to surround the upper surface 31, the first side surface 33, the third side surface 34, and the lower surface 32 of the battery 30. In the embodiment of FIG. 5, the wrapping member 40 may be disposed to surround a portion of the lower surface 32, the first side surface 33, the upper surface 31, and the third side surface 34. For example, both end portions of the wrapping member 40 may be placed to surround the left and right portions of the lower surface 32 of the battery 30. As an example, the wrapping member 40 may not be placed on the center portion between the left and right portions of the lower surface 32 of the battery 30.

However, the method of disposing the wrapping member 40 is not limited thereto. The wrapping member 40 may be placed in various ways as long as it can separate the battery 30 from the support plate 11. For example, the wrapping member 40 may be placed to surround the entire outer surface of the battery 30.

According to one embodiment, the wrapping member 40 may include a first region 421, a second region 422, a third region 423, and a fourth region 424. For example, the first region 421 of the wrapping member 40 may be positioned on or adjacent to (i.e. with a gap between) the upper surface 31 of the battery 30 and may face the opening 113 of the support plate 11. The second region 422 may be positioned on the upper surface 31 of the battery 30 and may not overlap with the opening 113 of the support plate 11. The third region 423 may be positioned on the side surface of the battery 30. For example, the third region 423 may surround the first side surface 33 and the third side surface 34 of the battery 30. The fourth region 424 may be positioned on the lower surface 32 of the battery 30. For example, the fourth region 424 may surround the left and right portions of the lower surface 32 of the battery 30.

According to one embodiment, the wrapping member 40 may include a first wrapping portion 41 that is adhered to the battery 30 and a second wrapping portion 42 (e.g. first region 421) that is not adhered to the battery 30.

According to one embodiment, the first wrapping portion 41 may adhere the wrapping member 40 to the battery 30 so that the wrapping member 40 is not completely separated from the battery 30. The first wrapping portion 41 may be positioned on the lower surface 32 of the battery 30. Accordingly, the fourth region 424 of the wrapping member 40 may form the first wrapping portion 41.

The first wrapping portion 41 may be adhered to the lower surface 32 of the battery 30 with a wrapping adhesive 411. Various adhesives may be used as the wrapping adhesive 411. For example, a double-sided tape may be used as the wrapping adhesive 411.

In the embodiment of FIG. 5, the first wrapping portion 41 may be positioned on the left and right portions of the lower surface 32 of the battery 30. The left side of the first wrapping portion 41 may be adhered to the left portion of the lower surface 32 of the battery 30 by the wrapping adhesive 411. The right side of the first wrapping portion 41 may be adhered to the right portion of the lower surface 32 of the battery 30 by the wrapping adhesive 411.

The second wrapping portion 42 may be a portion of the wrapping member 40 that wraps the upper surface 31 and the side surface of the battery 30. For example, the second wrapping portion 42 may wrap the upper surface 31, the first side surface 33, and the third side surface 34 of the battery 30. Accordingly, the first region 421, the second region 422, and the third region 423 of the wrapping member 40 may form the second wrapping portion 42.

For example, there may be no adhesive between the second wrapping portion 42 and the battery 30. In one embodiment, a wrapping adhesive (not illustrated) having a weaker adhesive force than the wrapping adhesive 411 may be placed between the second wrapping portion 42 and the battery 30.

According to one embodiment, the battery 30 may be attached to the heat spreader 20 (e.g. suspended from) by the wrapping member 40 and an adhesive member 50. The adhesive member 50 may be positioned between the upper surface 31 of the battery 30 and the heat spreader 20. For example, the adhesive member 50 may be placed between the wrapping member 40 and the heat spreader 20. The adhesive member 50 may be formed, for example, in a flat shape. For example, a double-sided tape may be used as the adhesive member 50.

According to one embodiment, the adhesive member 50 may include a plurality of adhesive portions. For example, as illustrated in FIG. 6, the adhesive member 50 may include a first adhesive portion 51 and a second adhesive portion 52 that are spaced apart from each other. The second adhesive portion 52 may be spaced apart from the first adhesive portion 51 in a direction substantially parallel to the support plate 11. Because the support plate 11 is placed substantially parallel to the display 90, the first adhesive portion 51 and the second adhesive portion 52 may be spaced apart from each other in a direction substantially parallel to the display 90.

According to one embodiment, because the battery 30 is surrounded by the wrapping member 40, the adhesive member 50 may attach the wrapping member 40 to a portion of the heat spreader 20, for example, the lower surface of the protruding portion 23. The adhesive member 50 may be attached to the second wrapping portion 42 of the wrapping member 40. A portion of the second wrapping portion 42 where the adhesive member 50 is placed may be referred to as the first region 421. Therefore, the adhesive member 50 may attach the first region 421 of the second wrapping portion 42 to at least a portion of the heat spreader 20.

According to one embodiment, when the heat spreader 20 and the battery 30 are pressed during the assembly process, the first region 421 of the second wrapping portion 42 may be attached to the lower surface of the heat spreader 20 by the adhesive member 50.

According to one embodiment, when the adhesive member 50 is placed on the protruding portion 23 of the heat spreader 20, the lower surface of the adhesive member 50 may not protrude lower than the second surface 112 of the support plate 11. For example, there may be a gap between the lower surface of the adhesive member 50 and the second surface 112 of the support plate 11. For example, the thickness T of the adhesive member 50 may be smaller than the gap G between the protruding portion 23 of the heat spreader 20 and the second surface 112 of the support plate 11.

According to one embodiment, the adhesive member 50 may be thicker than the thickness t of the wrapping member 40. For example, the thickness T of the adhesive member 50 may be about 0.05 mm.

According to one embodiment, when the second wrapping portion 42 of the wrapping member 40 is bonded to the heat spreader 20 with the adhesive member 50, at least a portion of the second wrapping portion 42 may be spaced apart from the upper surface 31 of the battery 30. For example, the upper surface of the first region 421 of the second wrapping portion 42 may be positioned closer to the first surface 111 than the second surface 112 of the support plate 11.

According to one embodiment, a portion of the battery 30 may be attached to the second surface 112 of the support plate 11. For example, a portion of the battery 30 that does not overlap with the opening 113 of the support plate 11 may be attached to the second surface 112 of the support plate 11, where the attachment may be via second regions 422 of the wrapping member 40 such that the upper surface 31 of the battery 30 is not in direct contact with the second surface 112 of the support plate 11.

According to one embodiment, the battery 30 may be attached to the second surface 112 of the support plate 11 by a sub-adhesive member 60. For example, the sub-adhesive member 60 may be positioned between the upper surface 31 of the battery 30 and the second surface 112 of the support plate 11. The sub-adhesive member 60 may be placed between the second region 422 of the wrapping member 40 and the second surface 112 of the support plate 11, thereby attaching the second region 422 to the second surface 112.

Referring to FIG. 6, in one embodiment, the sub-adhesive member 60 may be placed around the opening 113 of the support plate 11. For example, the sub-adhesive member 60 may be placed to surround three sides of the opening 113. Accordingly, the sub-adhesive member 60 may be placed around the adhesive member 50 placed on the heat spreader 20 accommodated in the opening 113 of the support plate 11.

For example, a double-sided tape may be used as the sub-adhesive member 60. For example, the thickness of the sub-adhesive member 60 may be thinner than the thickness T of the adhesive member 50. Alternatively, the thickness of the sub-adhesive member 60 may be approximately the same as the thickness T of the adhesive member 50. For example, the sub-adhesive member 60 may be formed in a narrow band shape.

Because the battery 30 is surrounded by the wrapping member 40, the sub-adhesive member 60 may attach the wrapping member 40 to the second surface 112 of the support plate 11. The sub-adhesive member 60 may be attached to the second region 422 of the wrapping member 40.

For example, a portion of the second wrapping portion 42 where the sub-adhesive member 60 is placed may be referred to as the second region 422. In one embodiment, the second region 422 of the wrapping member 40 may not overlap with the opening 113 of the support plate 11. As an example, the second region 422 of the wrapping member 40 may not face the opening 113 of the support plate 11. Accordingly, the sub-adhesive member 60 may adhere the second region 422 of the wrapping member 40 to a portion of the second surface 112 of the support plate 11.

For example, the second region 422 of the wrapping member 40 where the sub-adhesive member 60 is placed may be positioned around the first region 421 where the adhesive member 50 is disposed.

According to one embodiment, the thickness T of the adhesive member 50 may be smaller than the gap G1 between the lower surface of the protruding portion 23 of the heat spreader 20 and the second region 422 of the second wrapping portion 42 of the wrapping member 40 covering the upper surface 31 of the battery 30. For example, the thickness T of the adhesive member 50 may be smaller than a value obtained by subtracting the thickness t of the wrapping member 40 from the distance G2 between the heat spreader 20 and the upper surface 31 of the battery 30.

For example, the gap G1 between the lower surface of the protruding portion 23 of the heat spreader 20 and the second region 422 of the second wrapping portion 42 may be about 0.12 mm to about 0.15 mm. When the thickness t of the wrapping member 40 is about 0.02 mm, the gap G2 between the lower surface of the protruding portion 23 of the heat spreader 20 and the upper surface 31 of the battery 30 may be about 0.14 mm to about 0.17 mm. In this case, the thickness T of the adhesive member 50 may be about 0.05 mm.

Accordingly, when the first region 421 of the second wrapping portion 42 of the wrapping member 40 is attached to the protruding portion 23 of the heat spreader 20 by the adhesive member 50, at least a portion of the first region 421 of the second wrapping portion 42 may be spaced apart from the upper surface 31 of the battery 30. As an example, the first region 421 of the wrapping member 40 may be positioned closer to the protruding portion 23 of the heat spreader 20 than the second region 422. For example, when the thickness t of the wrapping member 40 is about 0.02 mm and the thickness T of the adhesive member 50 is about 0.05 mm, the gap (or distance) G3 between the lower surface of the first region 421 of the wrapping member 40 and the upper surface 31 of the battery 30 may be 0.07 mm to 0.10 mm.

According to one embodiment, when the first region 421 of the second wrapping portion 42 of the wrapping member 40 is attached to the protruding portion 23 of the heat spreader 20 by the adhesive member 50, the portion 425 between the first region 421 and the second region 422 of the wrapping member 40 may form an inclined surface (i.e. inclined with respect to the upper surface 31 of the battery 30 or the second region 422 of the wrapping member 40).

As a result the attachment of the second region 422 to the second surface 112 of the support plate 11 and/or the attachment of the first region 421 to the protruding portion 23 of the heat spreader 20, a tensile force (tension) may be applied to the portion 425 between the first region 421 and the second region 422 of the wrapping member 40. Therefore, the battery 30 may be firmly fixed to the second surface 112 of the support plate 11 by the wrapping member 40.

According to one embodiment, when the gap G1 is less than about 0.12 mm, the tensile force acting between the first region 421 and the second region 422 of the wrapping member 40 may be small, thereby reducing the effect of fixing the battery 30. In addition, when the gap G1 is greater than about 0.15 mm, it may be difficult to minimize the thickness of the electronic device 101. Consequently, by providing a gap G1 that is between approximately 0.12mm and 0.15mm, an advantageous balance between robust fixing of the battery 30 and the thickness of the battery arrangement and thus the electronic device 101 may be obtained. Furthermore, as is described below in more detail, this structural arrangement may also reduce or prevent unintended contact between the battery 30 and the support plate 11 and/or heat spreader 20 that may occur when the electronic device 101 is dropped or otherwise experiences a mechanical shock.

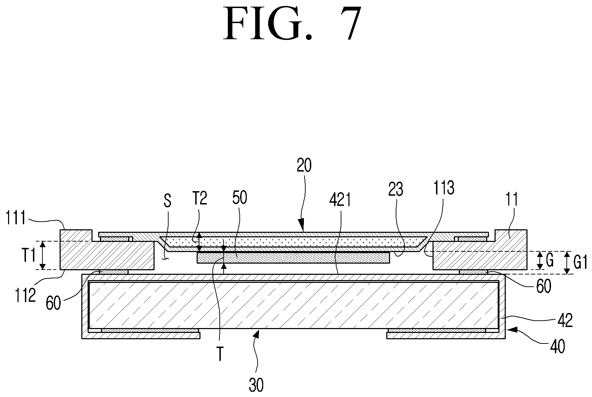

The electronic device 101 according to one or more embodiments of the disclosure having the structure described above may also overcome deviations in the thickness of the support plate 11 and the thickness of the heat spreader 20 that may occur when manufacturing the support plate 11 and the heat spreader 20 due to the tolerances of the manufacturing processes. In particular, the above-described structure may allow for such deviations to be accommodated without the overall structure being affected and the associated advantages being lost. Hereinafter, this will be described in more detail with reference to FIG. 7.

**FIG.** 7 is a view for explaining a dimensional relationship of an electronic device 101, which illustrates some of the issues that may occur with existing structures that embodiments of the present disclosure address.

As an example, a case is explained where the design gap (hereinafter, space gap) G1 between the lower surface of the protruding portion 23 of the heat spreader 20 and the first region 421 of the second wrapping portion 42 positioned on the upper surface 31 of the battery 30 is 0.13 mm, the thickness T1 of the support plate 11 is 0.27 ± 0.05 mm, the maximum value of the thickness T2 of the heat spreader 20 is 0.27 mm, and the minimum value thereof is 0.23 mm.

For example, when the thickness T1 of the support plate 11 is maximum and the thickness T2 of the heat spreader 20 is minimum, the actual space gap G1 may be 0.22 mm (0.32 - 0.23 + 0.13). For example, when the thickness T1 of the support plate 11 is minimum and the thickness T2 of the heat spreader 20 is maximum, the actual space gap G1 may be 0.08 mm (0.22 - 0.27 + 0.13).

When fixing the battery 30 with the adhesive member 50, the adhesive member 50 must be able to be compressed from 0.22 mm to 0.08 mm due to possible differences in the gap G1. When the adhesive member 50 is a double-sided tape, a double-sided tape having such compression characteristics does not currently exist or is very difficult to manufacture.

In the electronic device 101 according to the disclosure, the protruding portion 23 of the heat spreader 20 and the first region 421 of the second wrapping portion 42 of the wrapping member 40 wrapping the battery 30 are joined using the adhesive member 50 having a thickness equal to or smaller than the minimum space gap G1 (for example, T = 0.05 mm), so that the wrapping member 40 may be tensioned to compensate for the change in the actual space gap G1. Therefore, the electronic device 101 according to one or more embodiments of the disclosure may overcome the thickness deviation of the support plate 11 and the thickness deviation of the heat spreader 20 that occur when manufacturing them without reliance on an adhesive member having compression characteristics that are difficult to achieve.

In addition, the electronic device 101 according to one or more embodiments of the disclosure may reduce the chances of damage to components accommodated inside the electronic device 101 when the electronic device 101 is dropped due to the arrangement and adhesion of the wrapping member 40 without respect to the other components.

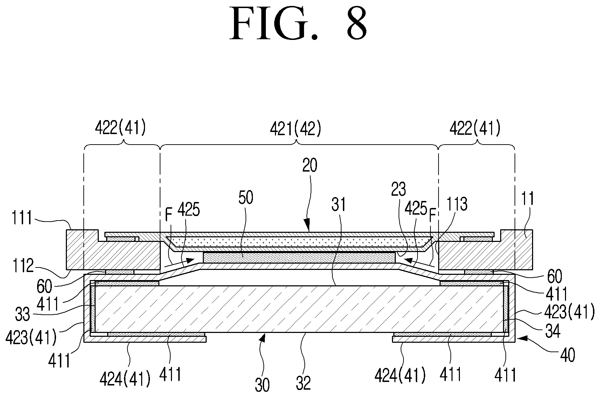

FIG. 8 is a view illustrating an electronic device 101 according to one or more embodiments of the disclosure.

Referring to FIG. 8, the electronic device 101 according to one or more embodiments of the disclosure may include a support plate 11, a heat spreader 20, a battery 30, and a wrapping member 40.

The support plate 11, the heat spreader 20, and the battery 30 of the electronic device 101 according to the embodiment illustrated in FIG. 8 are substantially the same as those of the electronic device 101 described above, therefore they will not be described again here.

According to one embodiment, the wrapping member 40 may be placed on the outer surface of the battery 30. The wrapping member 40 may be formed to separate the battery 30 from the support plate 11.

According to one embodiment, the wrapping member 40 may be formed in a thin film shape. For example, the wrapping member 40 may be formed as a film having a thickness t of about 0.02 mm. The wrapping member 40 may be formed of a plastic material such as, for example, polyethylene PE.

According to one embodiment, the wrapping member 40 may be disposed to surround at least a portion of the battery 30. For example, the wrapping member 40 may be disposed to surround the upper surface 31, the first side surface 33, the third side surface 34, and the lower surface 32 of the battery 30. In the embodiment of FIG. 8, the wrapping member 40 may be disposed to surround a portion of the lower surface 32, the first side surface 33, the upper surface 31, and the third side surface 34 of the battery 30. For example, both end portions of the wrapping member 40 may be placed to surround the left and right portions of the lower surface 32 of the battery 30. As an example, the wrapping member 40 may not be placed on the center portion between the left and right portions of the lower surface 32 of the battery 30.

According to one embodiment, the wrapping member 40 may include a first region 421, a second region 422, a third region 423, and a fourth region 424. For example, the first region 421 of the wrapping member 40 may be positioned on the upper surface 31 of the battery 30 and may face the opening 113 of the support plate 11. The second region 422 may be positioned on the upper surface 31 of the battery 30 and may not overlap with the opening 113 of the support plate 11. The third region 423 may be positioned on the side surface of the battery 30. For example, the third region 423 may surround the first side surface 33 and the third side surface 34 of the battery 30. The fourth region 424 may be positioned on the lower surface 32 of the battery 30. For example, the fourth region 424 may surround the left and right portions of the lower surface 32 of the battery 30.

According to one embodiment, the wrapping member 40 may include a first wrapping portion 41 that is adhered to the battery 30 and a second wrapping portion 42 that is not adhered to the battery 30.

According to one embodiment, the first wrapping portion 41 may adhere the wrapping member 40 to the battery 30 so that the wrapping member 40 is adhered to the battery 30. For example, the first wrapping portion 41 may be positioned on the lower surface 32, the first side surface 33, the third side surface 34, and a portion of the upper surface 31 of the battery 30. Accordingly, the second region 422, the third region 423, and the fourth region 424 of the wrapping member 40 may form the first wrapping portion 41.

For example, the first wrapping portion 41 may include the second region 422 that does not overlap with the opening 113 of the support plate 11. The second region 422 of the first wrapping portion 41 may not overlap with the opening 113 of the support plate 11.

For example, the first wrapping portion 41 may include the third region 423 positioned on the side surface of the battery 30. The third region 423 of the first wrapping portion 41 may be positioned on the first side surface 33 and the third side surface 34 of the battery 30.

For example, the first wrapping portion 41 may include the fourth region 424 positioned on the lower surface 32 of the battery 30. The fourth region 424 of the first wrapping portion 41 may be positioned on the left and right portions of the lower surface 32 of the battery 30.

According to one embodiment, the first wrapping portion 41 may be adhered to the battery 30 by the wrapping adhesive 411. For example, the second region 422, the third region 423, and the fourth region 424 of the first wrapping portion 41 may be adhered to the battery 30 by the wrapping adhesive 411.

For example, the second region 422 of the first wrapping portion 41 may be adhered to a portion of the upper surface 31 of the battery 30 by the wrapping adhesive 411. The third region 423 of the first wrapping portion 41 may be adhered to the first side surface 33 and the third side surface 34 of the battery 30 by the wrapping adhesive 411. The fourth region 424 of the first wrapping portion 41 may be attached to the left and right portions of the lower surface 32 of the battery 30 by the wrapping adhesive 411.

According to one embodiment, various adhesives may be used as the wrapping adhesive 411. For example, a double-sided tape may be used as the wrapping adhesive 411.

According to one embodiment, the second wrapping portion 42 may be a portion of the wrapping member 40 facing the opening 113 of the support plate 11. For example, the first region 421 of the wrapping member 40 may form the second wrapping portion 42.

For example, there may be no adhesive between the second wrapping portion 42 and the battery 30. In one embodiment, a wrapping adhesive (not illustrated) having a weaker adhesive force than the wrapping adhesive 411 may be placed between the second wrapping portion 42 and the battery 30.

According to one embodiment, the battery 30 may be attached to the heat spreader 20 by the wrapping member 40 and an adhesive member 50. The adhesive member 50 may be positioned between the upper surface 31 of the battery 30 and the heat spreader 20. For example, the adhesive member 50 may be placed between the wrapping member 40 and the heat spreader 20. Because the adhesive member 50 is substantially the same as the adhesive member 50 according to the above-described embodiment, it will not be described again here.

In FIG. 8, the case where the second region 422 and the third region 423 of the wrapping member 40 are attached to the battery 30 by the wrapping adhesive 411 is described, but the disclosure is not limited thereto. In one embodiment, the second region 422 or the third region 423 of the wrapping member 40 may not be attached to the battery 30 by the wrapping adhesive 411. For example, there is no wrapping adhesive 411 between the second region 422 of the wrapping member 40 and the battery 30 or between the third region 423 of the wrapping member 40 and the battery 30.

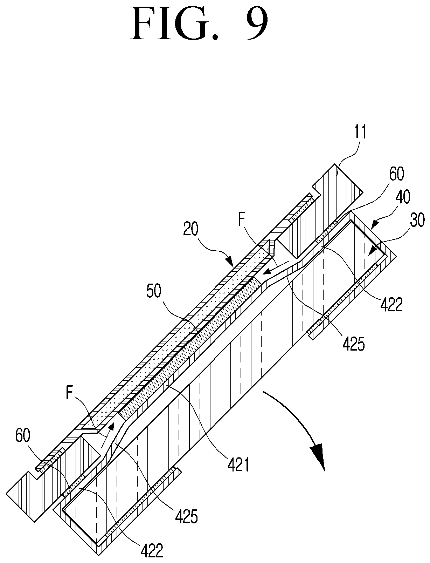

Hereinafter, when performing a drop test of the electronic device 101, movement of the battery 30 of the electronic device 101 according to one or more embodiments of the disclosure will be described in detail with reference to FIGS. 9, 10, and 11. For reference, in FIGS. 9, 10 and 11, for convenience of illustration and explanation, other components of the electronic device 101 are removed and the support plate 11, the heat spreader 20, and the battery 30 are illustrated.

FIG. 9 is a view illustrating an electronic device 101 according to one or more embodiments of the disclosure performing a 45 degree rearward drop test.

Referring to FIG. 9, the battery 30 is surrounded by the wrapping member 40, and the first region 421 of the wrapping member 40 is attached to the lower surface of the heat spreader 20 by the adhesive member 50. In addition, the second region 422 of the wrapping member 40 is attached to the second surface 112 of the support plate 11 by the sub-adhesive member 60. At this time, a tensile force F may be applied to the portion 425 between the first region 421 and the second region 422 of the wrapping member 40.

Therefore, because the wrapping member 40 pulls the battery 30 toward the support plate 11 with the tensile force F, when the electronic device 101 is dropped backward at a 45-degree angle as illustrated in FIG. 9, the battery 30 may be reduced from moving toward the lower cover 80.

Components such as, for example, a printed circuit board, a flexible printed circuit board, or a connector may be located between the battery 30 and the lower cover 80. Therefore, when the battery 30 moves toward the lower cover 80 during the 45-degree rearward drop test, components such as the printed circuit board, the flexible printed circuit board, or the connector may be damaged by the battery 30. However, the electronic device 101 according to one or more embodiments of the disclosure may reduce movement of the battery 30 toward the lower cover 80, thereby reducing damage to components such as the printed circuit board, the flexible printed circuit board, or the connector during the 45-degree rearward drop test.

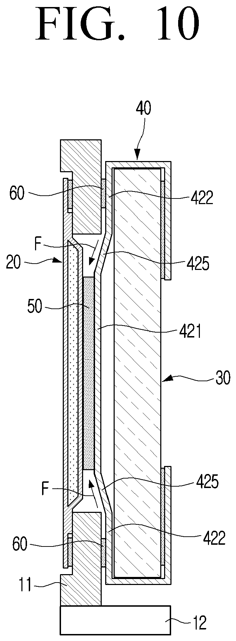

FIG. 10 is a view illustrating an electronic device 101 according to one or more embodiments of the disclosure performing a bottom-side drop test.

The bottom-side drop test is a test to check whether the battery 30 is damaged by colliding with the side member 12 of the housing 10 when the electronic device 101 is dropped.

Referring to FIG. 10, the battery 30 is surrounded by the wrapping member 40, and the first region 421 of the second wrapping portion 42 of the wrapping member 40 is attached to the lower surface of the heat spreader 20 by the adhesive member 50. In addition, the second region 422 of the wrapping member 40 is attached to the second surface 112 of the support plate 11 by the sub-adhesive member 60. At this time, a tensile force F may be applied to the portion 425 between the first region 421 and the second region 422 of the wrapping member 40.

Therefore, because the wrapping member 40 pulls the battery 30 toward the support plate 11 with the tensile force F, when the electronic device 101 is dropped with its bottom side facing downward as illustrated in FIG. 10, the movement of the battery 30 toward the side member 12 of the housing 10 may be reduced. Therefore, the impact force due to the collision between the battery 30 and the side member 12 may be reduced, so that damage to the battery 30 may be reduced.

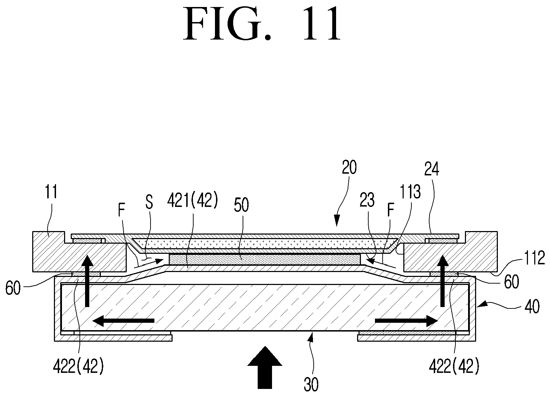

FIG. 11 is a view illustrating an electronic device 101 according to one or more embodiments of the disclosure performing a rear drop test.

The rear drop test is a test to check whether the heat spreader 20 is damaged when the electronic device 101 is dropped.

Referring to FIG. 11, the first region 421 of the second wrapping portion 42 of the wrapping member 40 surrounding the battery 30 is attached to the protruding portion 23 of the heat spreader 20 by the adhesive member 50, and the second region 422 of the wrapping member 40 is attached to the second surface 112 of the support plate 11 by the sub-adhesive member 60. Accordingly, a space S may be formed between the protruding portion 23 of the heat spreader 20 and the battery 30 by a certain distance. A portion 24 of the heat spreader 20 that is not accommodated in the opening 113 of the support plate 11 may be in contact with the support plate 11.

Therefore, as illustrated by the arrow in FIG. 11, when the electronic device 101 is dropped backward, the impact force may be transmitted to the support plate 11 through the battery 30, and a portion of the impact transmitted to the support plate 11 may be transmitted to the heat spreader 20. Accordingly, because the impact directly transmitted to the heat spreader 20 may be reduced, the damage to the heat spreader 20 may be reduced.

As explained with reference to and illustrated by FIGS. 9 to 11, the arrangement of the wrapping member 40 with respect to the battery 30, support plate 11, and heat spreader 20 act to provide a form of suspension (via the tensile force F) to the battery 30 and/or a means to transmit mechanical force from the battery 30 to the support plate 11 (via the second surface 112) instead of the heat spreader 20, thus protecting one or more of the battery 30, heat spreader 20, and other internal components when the electronic device 101 experiences a mechanical shock that may for example occur as a result of the electronic device 101 being dropped.

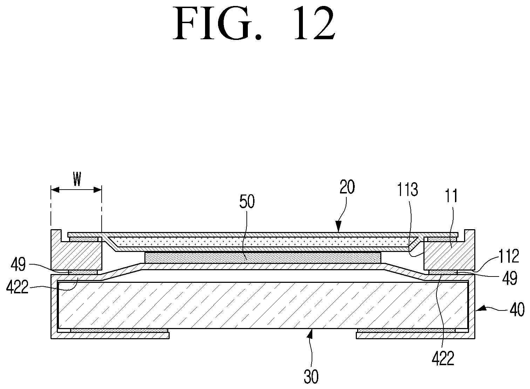

Hereinafter, an electronic device 101 according to one or more embodiments of the disclosure applied to different structures will be described in detail with reference to FIGS. 12, 13, 14, 15, 16, 17, and 18.

FIG. 12 is a view illustrating an electronic device 101 according to one or more embodiments of the disclosure.

Referring to FIG. 12, the size of the heat spreader 20 of the electronic device 101 according to one or more embodiments of the disclosure may be larger than the heat spreader 20 of the heat spreader 20 of the embodiment illustrated in FIG. 5 described above. In this case, the size of the opening 113 of the support plate 11 may be increased, and the width W of the support plate 11 around the opening 113 may be narrowed. Accordingly, it may be difficult to secure an area for attaching the sub-adhesive member 60 to the second surface 112 of the support plate 11.

In this case, as illustrated in FIG. 12, a shock absorbing member 49 may be attached to the second region 422 of the wrapping member 40 surrounding the battery 30 facing the second surface 112 of the support plate 11. Then, the thickness of the second region 422 of the wrapping member 40 may become thicker than the thickness of other portions of the wrapping member 40.

The shock absorbing member 49 may be formed of a material capable of absorbing shock. The lower surface of the shock absorbing member 49 may have adhesive force and may be attached to the second region 422 of the wrapping member 40. Because the upper surface of the shock absorbing member 49 has no adhesive force, the upper surface of the shock absorbing member 49 may not be attached to the second surface 112 of the support plate 11.

Therefore, when the electronic device 101 is dropped with its lower surface facing downward, the shock absorbing member 49 disposed on the wrapping member 40 may absorb the shock applied to the support plate 11 by the battery 30.

As an example, the shock absorbing member 49 may be formed integrally with the wrapping member 40. For example, a portion of the second region 422 of the wrapping member 40 corresponding to the shock absorbing member 49 of FIG. 12 may be formed thicker to correspond to the shock absorbing member 49.

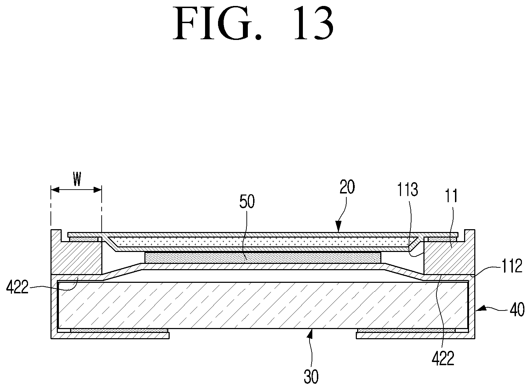

FIG. 13 is a view illustrating an electronic device 101 according to one or more embodiments of the disclosure.

As another example, when the size of the heat spreader 20 is large and the width W of the second surface 112 of the support plate 11 is narrow, as illustrated in FIG. 13, nothing may be placed between the second surface 112 of the support plate 11 and the wrapping member 40 of the battery 30, and the wrapping member 40 may directly contact the second surface 112 of the support plate 11.

For example, the second region 422 of the wrapping member 40 may be in contact with the second surface 112 of the support plate 11. However, the second region 422 of the wrapping member 40 may not be adhered to the second surface 112 of the support plate 11. In other words, there may be no adhesive between the second region 422 of the wrapping member 40 and the second surface 112 of the support plate 11.

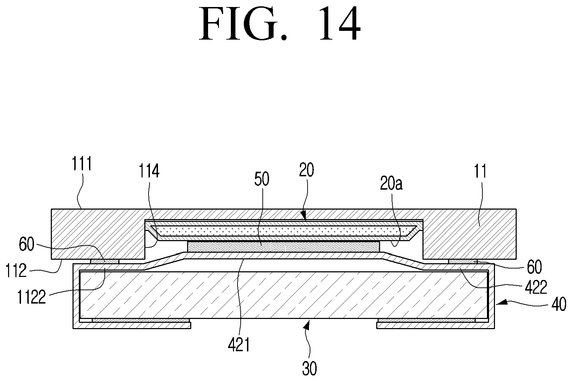

FIG. 14 is a view illustrating an electronic device 101 according to one or more embodiments of the disclosure.

Referring to FIG. 14, in the electronic device 101 according to one or more embodiments of the disclosure, the structure of the support plate 11 is different from that of the electronic device 101 according to the embodiment shown in FIG. 5.

According to one embodiment, the support plate 11 may include a first surface 111, a second surface 112 opposite to the first surface 111, and a recess 114 formed in the second surface 112. For example, the recess 114 may be formed concavely toward the first surface 111 in the second surface 112 and may be formed not to penetrate the support plate 11. In other words, a window/opening that extends only partially from the second surface 112 to the first surface 111 may be provided in the support plate 11.

The support plate 11 may support a flexible display 90. For example, the flexible display 90 may be disposed on the first surface 111 of the support plate 11.

The heat spreader 20 may be accommodated in the recess 114. The lower surface of the heat spreader 20 may be attached to the first region 421 of the second wrapping portion 42 of the wrapping member 40 surrounding the battery 30 by the adhesive member 50.

The second surface 112 of the support plate 11 may be attached to the second region 422 of the wrapping member 40 surrounding the battery 30 by the sub-adhesive member 60.

The battery 30, the wrapping member 40, the adhesive member 50, and the sub-adhesive member 60 are substantially the same as those in the embodiment illustrated in FIG. 5, and therefore they will not be described again here.

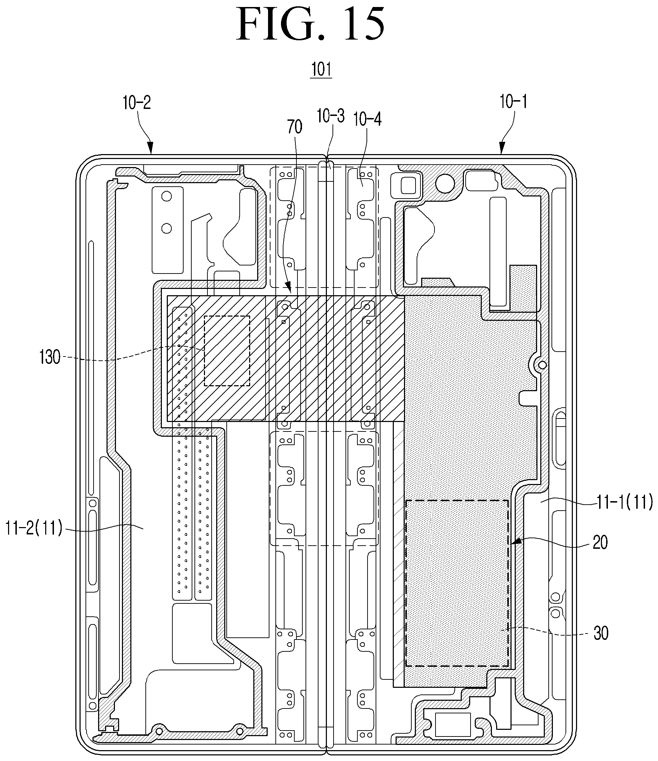

FIG. 15 is a view illustrating an electronic device 101 according to one or more embodiments of the disclosure. For reference, FIG. 15 shows a state where the display 90 is removed for convenience of illustration.

Referring to FIG. 15, the electronic device 101 according to one or more embodiments of the disclosure may include a first housing 10-1, a second housing 10-2, a hinge 10-3, or a hinge housing 104.

The first housing 10-1 and the second housing 10-2 may be configured to support the display 90. The first housing 10-1 may accommodate a first portion of the display 90. The first portion of the display 90 may be placed on the first housing 10-1. The second housing 10-2 may accommodate a second portion of the display 90. The second portion may be placed on the second housing 10-2.

The first housing 10-1 may include a first support plate 11-1 (e.g., support plate 11). For example, the support plate 11 may form at least a portion of the first housing 10-1. The second housing 10-2 may include a second support plate 11-2 (e.g., support plate 11).

For example, the heat spreader 20 and the battery 30 may be placed in the first housing 10-1. The battery 30 may be placed below the heat spreader 20 in a direction perpendicular to the plane of FIG. 15.

The first housing 10-1 and the second housing 10-2 may be connected by the hinge 10-3. The second housing 10-2 may be rotatably connected to the first housing 10-1 by the hinge 10-3.

The hinge housing 104 may accommodate the hinge 10-3 and may be placed between the first housing 10-1 and the second housing 10-2. The hinge housing 104 may be placed below the hinge 10-3 so that the hinge 10-3 is not exposed to the outside.

A heat transfer member 70 may be placed below the display 90. The heat transfer member 70 may be placed across the first housing 10-1 and the second housing 10-2. For example, the heat transfer member 70 may be disposed to extend from the first housing 10-1 through the hinge 10-3 to the second housing 10-2.

A portion of the heat transfer member 70 placed in the first housing 10-1 may be in contact with the heat spreader 20. An electronic component that emits heat may be placed below another portion of the heat transfer member 70 placed in the second housing 10-2 (in a direction perpendicular to the support plate 11 of FIG. 15). For example, the processor 130 configured to control the electronic device 101 may be placed below another portion of the heat transfer member 70 placed in the second housing 10-2 (in a direction perpendicular to the support plate 11 of FIG. 15). Accordingly, heat generated in the processor 130 disposed in the second housing 10-2 may be transferred to the heat spreader 20 disposed in the first housing 10-1 through the heat transfer member 70.

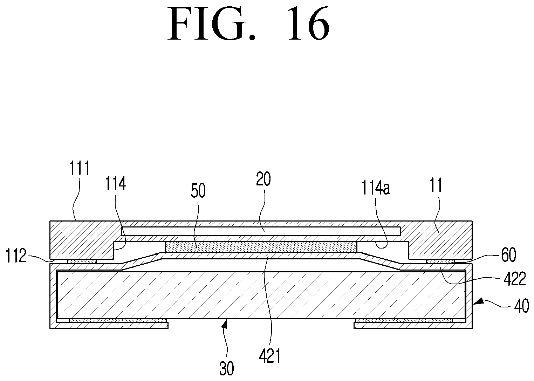

FIG. 16 is a view illustrating an electronic device 101 according to one or more embodiments of the disclosure.

Referring to FIG. 16, in the electronic device 101 according to one or more embodiments of the disclosure, the structure of the support plate 11 and the heat spreader 20 is different from those of the electronic device 101 according to the embodiment shown in FIG. 5.

According to one embodiment, the support plate 11 may include a first surface 111, a second surface 112 opposite to the first surface 111, and a recess 114 formed in the second surface 112. The recess 114 may be formed concavely from the second surface 112 of the support plate 11 toward the first surface 111, and may be formed not to penetrate the support plate 11. Accordingly, the bottom surface 114a of the recess 114 may form a step with the second surface 112 of the support plate 11.

According to one embodiment, the heat spreader 20 may be configured inside the support plate 11. For example, the heat spreader 20 may be configured inside the support plate 11 corresponding to the recess 114. In other words, the support plate 11 and the heat spreader 20 may be formed integrally.

The support plate 11 may support the flexible display 90. For example, the flexible display 90 may be disposed on the first surface 111 of the support plate 11.

The bottom surface 114a of the recess 114 may be attached to the first region 421 of the second wrapping portion 42 of the wrapping member 40 surrounding the battery 30 by the adhesive member 50.

The second surface 112 of the support plate 11 may be attached to the second region 422 of the second wrapping portion 42 of the wrapping member 40 surrounding the battery 30 by the sub-adhesive member 60.

The battery 30, the wrapping member 40, the adhesive member 50, and the sub-adhesive member 60 are substantially the same as those of the embodiment illustrated in FIG. 5 described above, and therefore they will not be described again here.

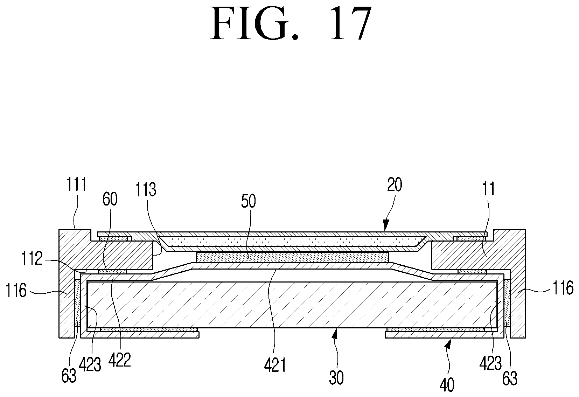

FIG. 17 is a view illustrating an electronic device 101 according to one or more embodiments of the disclosure.

Referring to FIG. 17, the support plate 11 may include a first surface 111, a second surface 112 opposite to the first surface 111, an opening 113 penetrating the first surface 111 and the second surface 112, and an inner side wall 116 extending from the second surface 112.

For example, the inner side wall 116 may be formed to extend downward from the second surface 112 of the support plate 11 and surround at least a portion of the side surface of the battery 30. The side surface of the battery 30 may be adhered to the inner side wall 116 by an additional adhesive member 63.

For example, the second wrapping portion 42 of the wrapping member 40 surrounding the battery 30 may include a third region 423 that surrounds at least a portion of the side surface of the battery 30. The third region 423 of the second wrapping portion 42 of the wrapping member 40 surrounding the battery 30 may be adhered to the inner side wall 116 of the support plate 11 by the additional adhesive member 63.

As illustrated in FIG. 17, the inner side wall 116 may include a left inner side wall 116 facing the left side surface of the battery 30 and a right inner side wall 116 facing right side surface of the battery 30. The third region 423 of the wrapping member 40 wrapping the left side surface of the battery 30 may be adhered to the left inner side wall 116 by the additional adhesive member 63. The third region 423 of the wrapping member 40 wrapping the right side surface of the battery 30 may be adhered to the right inner side wall 116 by the additional adhesive member 63.

For example, an adhesive may be used as the additional adhesive member 63.

As described above, when the inner side wall 116 is formed on the support plate 11 and the battery 30 is attached to the inner side wall 116 with the additional adhesive member 63, the battery 30 may be prevented or reduced from being separated when the electronic device 101 is dropped.

The heat spreader 20 may be accommodated in the opening 113 of the support plate 11. The lower surface of the heat spreader 20 may be attached to the first region 421 of the second wrapping portion 42 of the wrapping member 40 surrounding the battery 30 by the adhesive member 50.

The second surface 112 of the support plate 11 may be attached to the second region 422 of the second wrapping portion 42 of the wrapping member 40 surrounding the battery 30 by the sub-adhesive member 60.

The battery 30, the wrapping member 40, the adhesive member 50, and the sub-adhesive member 60 are substantially the same as those of the embodiment illustrated in FIG. 5 described above and therefore they will not be described again here.

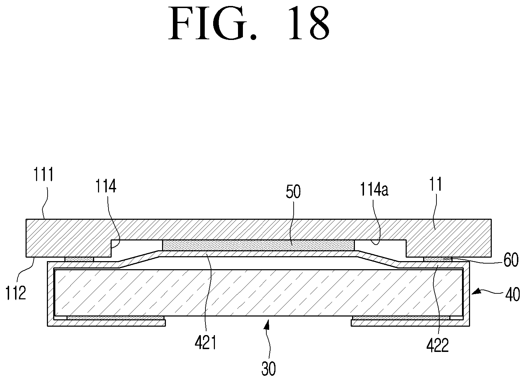

FIG. 18 is a view illustrating an electronic device 101 according to one or more embodiments of the disclosure.

Referring to FIG. 18, the electronic device 101 according to one or more embodiments of the disclosure is different from the electronic device 101 according to the embodiment illustrated in FIG. 5 in that it does not include a heat spreader 20.

According to one embodiment, the support plate 11 may include a first surface 111, a second surface 112 opposite to the first surface 111, and a recess 114 formed in the second surface 112. The recess 114 may be formed concavely toward the first surface 111 in the second surface 112 and may be formed not to penetrate the support plate 11.

The support plate 11 may support the display 90 or a flexible display. For example, the display 90 may be disposed on the first surface 111 of the support plate 11.

The bottom surface 114a of the recess 114 of the support plate 11 may be attached to the first region 421 of the second wrapping portion 42 of the wrapping member 40 surrounding the battery 30 by the adhesive member 50.

The second surface 112 of the support plate 11 may be attached to the second region 422 of the wrapping member 40 surrounding the battery 30 by the sub-adhesive member 60.

The battery 30, the wrapping member 40, the adhesive member 50, and the sub-adhesive member 60 are substantially the same as those of the embodiment illustrated in FIG. 5 described above, and therefore they will not be described again here.

The electronic device 101 according to one or more embodiments of the disclosure having the structure described above may overcome the thickness deviation of the support plate 11 and the thickness deviation of the heat spreader 20 that may occur due to the tolerances of the processes used during manufacturing.

In addition, the electronic device 101 according to one or more embodiments of the disclosure having the structure as described above may reduce cases where components accommodated inside the electronic device 101 are damaged when the electronic device 101 is dropped. In particular, the securing of the battery 30 via the use of the wrapping member 40 and the tensile force of portions 425 of the wrapping member 40 reduce the likelihood of the battery 30 contacting other components of the electronic device 101 when the electronic device 101 is dropped. The securing of the wrapping member 40 to a second (i.e. lower) surface 112 of the support plate 11 may also reduce the transmission of force to the heat spreader 20 when the electronic device 101 is dropped.

In the foregoing, the disclosure has been shown and described with reference to various embodiments. However, it is understood by those skilled in the art that various changes may be made in form and detail without departing from the scope of the disclosure as defined by the appended claims.

## Claims

1. An electronic device (101) comprising:
a support plate (11) comprising a first surface (111), a second surface (112) opposite to the first surface, and an opening (113) formed in the second surface;
a display (90) supported at least in part by the first surface of the support plate;
a battery (30) supported at least in part by the second surface of the support plate, the battery including an upper surface (31) facing the second surface of the support plate;
a heat spreader (20) disposed between the display and the battery such that at least a portion of the heat spreader is accommodated in the opening of the support plate;
**characterized by**,
a wrapping member (40) surrounding at least a portion of the battery, the wrapping member comprising a first wrapping portion (41) adhered to the battery and a second wrapping portion (42) not adhered to the battery; and
an adhesive member (50) adhering the at least a portion of the heat spreader to a first region of the second wrapping portion.

2. The electronic device of claim 1, wherein at least a portion of the first region of the second wrapping portion is spaced apart from the upper surface of the battery.

3. The electronic device of claims 1 or 2, wherein a distance (G3) between a lower surface of the second wrapping portion and the upper surface of the battery is 0.07 mm to 0.10 mm.

4. The electronic device of any preceding claim, wherein a thickness (T) of the adhesive member is smaller than a difference between a thickness of the wrapping member and a distance (G2) between a lower surface of the heat spreader and the upper surface of the battery.

5. The electronic device of any preceding claim, wherein a thickness (T) of the adhesive member is substantially thicker than a thickness (t) of the wrapping member.

6. The electronic device of any preceding claim, wherein the wrapping member comprises a second region disposed on the upper surface of the battery that does not overlap the opening of the support plate.

7. The electronic device of claim 6, wherein the electronic device further comprises a sub adhesive member configured to adhere a region of the second surface of the support plate to the second region of the wrapping member, or wherein the second region of the wrapping member is not adhered to the second surface of the support plate.

8. The electronic device of any preceding claim, wherein
the battery further includes a lower surface opposite to the upper surface of the battery and a side surface connecting the upper surface and the lower surface,
the support plate further includes an inner side wall extending from the second surface and surrounding a portion of the side surface of the battery,
the wrapping member includes a third region surrounding at least a portion of the side surface of the battery, and
the electronic device further comprises an additional adhesive member configured to adhere the third region of the wrapping member to the inner side wall of the support plate.

9. The electronic device of any of claims 1 to 7, wherein the battery further includes a lower surface opposite to the upper surface thereof and a side surface connecting the upper surface and the lower surface, the first wrapping portion of the wrapping member is disposed on the lower surface, and the second wrapping portion is disposed on the upper surface and the side surface.

10. The electronic device of any of claims claim 1 to 7, wherein
the battery further includes a lower surface opposite to the upper surface thereof and a side surface connecting the upper surface and the lower surface,
the first wrapping portion of the wrapping member extends from the lower surface through the side surface to a portion of the upper surface that does not overlap the opening, and the second wrapping portion is placed on a portion of the upper surface that overlaps the opening.

11. The electronic device of any preceding claim, wherein the adhesive member includes a first adhesive portion and a second adhesive portion spaced apart from the first adhesive portion in a direction substantially parallel to the display.

12. The electronic device of any preceding claim, further comprising:
a processor;
wherein when viewed from a top of the display, the heat spreader includes a first heat spreading portion placed to overlap the processor and a second heat spreading portion configured to extend from the first heat spreading portion to overlap the battery, and
wherein the second heat spreading portion forms the at least a portion of the heat spreader accommodated within the opening of the support plate.

13. The electronic device of any preceding claim, further comprising: a heat transfer member disposed between the display and the heat spreader, wherein an area of the heat transfer member is substantially smaller than an area of the display and is substantially larger than an area of the heat spreader.

14. The electronic device of claim 13, further comprising:
a hinge;
a first housing configured to accommodate a first portion of the display;
a second housing rotatably connected to the first housing by the hinge and configured to accommodate a second portion of the display; and
a hinge housing disposed between the first housing and second housing and configured to accommodate the hinge,
wherein the support plate forms at least a portion of the first housing, and
wherein the heat transfer member extends from the first housing through at least one of the hinge and the hinge housing to the second housing.

15. The electronic device of any preceding claim, wherein the opening of the support plate extends from the second surface of the support plate to the first surface of the support plate.

## Patentansprüche

1. Elektronische Vorrichtung (101), umfassend:
eine Trägerplatte (11), die eine erste Oberfläche (111), eine zweite Oberfläche (112) gegenüber der ersten Oberfläche und eine Öffnung (113), die in der zweiten Oberfläche ausgebildet ist, umfasst;
eine Anzeige (90), die mindestens teilweise von der ersten Oberfläche der Trägerplatte getragen wird;
eine Batterie (30), die mindestens teilweise von der zweiten Oberfläche der Trägerplatte getragen wird, wobei die Batterie eine obere Oberfläche (31) beinhaltet, die der zweiten Oberfläche der Trägerplatte zugewandt ist;
einen Wärmeverteiler (20), der zwischen der Anzeige und der Batterie angeordnet ist, sodass mindestens ein Abschnitt des Wärmeverteilers in der Öffnung der Trägerplatte aufgenommen ist;
**gekennzeichnet durch**
ein Umhüllungselement (40), das mindestens einen Abschnitt der Batterie umgibt, wobei das Umhüllungselement einen ersten Umhüllungsabschnitt (41), der an der Batterie klebt, und einen zweiten Umhüllungsabschnitt (42), der nicht an der Batterie klebt, umfasst; und
ein Klebelement (50), das den mindestens einen Abschnitt des Wärmeverteilers an einen ersten Bereich des zweiten Umhüllungsabschnitts klebt.

2. Elektronische Vorrichtung nach Anspruch 1, wobei mindestens ein Abschnitt des ersten Bereichs des zweiten Umhüllungsabschnitts von der oberen Oberfläche der Batterie beabstandet ist.

3. Elektronische Vorrichtung nach Anspruch 1 oder 2, wobei ein Abstand (G3) zwischen einer unteren Oberfläche des zweiten Umhüllungsabschnitts und der oberen Oberfläche der Batterie 0,07 mm bis 0,10 mm beträgt.

4. Elektronische Vorrichtung nach einem vorhergehenden Anspruch, wobei eine Dicke (T) des Klebelements kleiner als eine Differenz zwischen einer Dicke des Umhüllungselements und einem Abstand (G2) zwischen einer unteren Oberfläche des Wärmeverteilers und der oberen Oberfläche der Batterie ist.

5. Elektronische Vorrichtung nach einem vorhergehenden Anspruch, wobei eine Dicke (T) des Klebelements im Wesentlichen dicker als eine Dicke (t) des Umhüllungselements ist.

6. Elektronische Vorrichtung nach einem vorhergehenden Anspruch, wobei das Umhüllungselement einen zweiten Bereich umfasst, der auf der oberen Oberfläche der Batterie angeordnet ist, der die Öffnung der Trägerplatte nicht überlappt.

7. Elektronische Vorrichtung nach Anspruch 6, wobei die elektronische Vorrichtung ferner ein Unterklebelement umfasst, das dazu konfiguriert ist, einen Bereich der zweiten Oberfläche der Trägerplatte an den zweiten Bereich des Umhüllungselements zu kleben, oder wobei der zweite Bereich des Umhüllungselements nicht an die zweite Oberfläche der Trägerplatte geklebt ist.

8. Elektronische Vorrichtung nach einem vorhergehenden Anspruch, wobei
die Batterie ferner eine untere Oberfläche, die der oberen Oberfläche der Batterie gegenüberliegt, und eine seitliche Oberfläche, die die obere Oberfläche und die untere Oberfläche verbindet, beinhaltet,
die Trägerplatte ferner eine innere Seitenwand beinhaltet, die sich von der zweiten Oberfläche erstreckt und einen Abschnitt der seitlichen Oberfläche der Batterie umgibt,
das Umhüllungselement einen dritten Bereich beinhaltet, der mindestens einen Abschnitt der seitlichen Oberfläche der Batterie umgibt, und
die elektronische Vorrichtung ferner ein zusätzliches Klebelement umfasst, das dazu konfiguriert ist, den dritten Bereich des Umhüllungselements an die inneren Seitenwand der Trägerplatte zu kleben.

9. Elektronische Vorrichtung nach einem der Ansprüche 1 bis 7, wobei die Batterie ferner eine untere Oberfläche, die der oberen Oberfläche davon gegenüberliegt, und eine seitliche Oberfläche, die die obere Oberfläche und die untere Oberfläche verbindet, beinhaltet, der erste Umhüllungsabschnitt des Umhüllungselements auf der unteren Oberfläche angeordnet ist und der zweite Umhüllungsabschnitt auf der oberen Oberfläche und der seitlichen Oberfläche angeordnet ist.

10. Elektronische Vorrichtung nach einem der Ansprüche Anspruch 1 bis 7, wobei
die Batterie ferner eine untere Oberfläche, die der oberen Oberfläche davon gegenüberliegt, und eine seitliche Oberfläche, die die obere Oberfläche und die untere Oberfläche verbindet, beinhaltet,
sich der erste Umhüllungsabschnitt des Umhüllungselements von der unteren Oberfläche durch die seitliche Oberfläche zu einem Abschnitt der oberen Oberfläche, der die Öffnung nicht überlappt, erstreckt und der zweite Umhüllungsabschnitt auf einem Abschnitt der oberen Oberfläche, der die Öffnung überlappt, platziert ist.

11. Elektronische Vorrichtung nach einem vorhergehenden Anspruch, wobei das Klebelement einen ersten Klebabschnitt und einen zweiten Klebabschnitt, der von dem ersten Klebabschnitt in einer Richtung im Wesentlichen parallel zu der Anzeige beabstandet ist, beinhaltet.

12. Elektronische Vorrichtung nach einem vorhergehenden Anspruch, ferner umfassend:
einen Prozessor;
wobei der Wärmeverteiler, von einer Oberseite der Anzeige aus betrachtet, einen ersten Wärmeverteilungsabschnitt, der so platziert ist, dass er den Prozessor überlappt, und einen zweiten Wärmeverteilungsabschnitt, der so konfiguriert ist, dass er sich von dem ersten Wärmeverteilungsabschnitt erstreckt, um die Batterie zu überlappen, beinhaltet und
wobei der zweite Wärmeverteilungsabschnitt den mindestens einen Abschnitt des Wärmeverteilers bildet, der in der Öffnung der Trägerplatte aufgenommen ist.

13. Elektronische Vorrichtung nach einem vorhergehenden Anspruch, ferner umfassend: ein Wärmeübertragungselement, das zwischen der Anzeige und dem Wärmeverteiler angeordnet ist, wobei eine Fläche des Wärmeübertragungselements im Wesentlichen kleiner als eine Fläche der Anzeige ist und im Wesentlichen größer als eine Fläche des Wärmeverteilers ist.

14. Elektronische Vorrichtung nach Anspruch 13, ferner umfassend:
ein Scharnier;
ein erstes Gehäuse, das dazu konfiguriert ist, einen ersten Abschnitt der Anzeige aufzunehmen;
ein zweites Gehäuse, das durch das Scharnier drehbar mit dem ersten Gehäuse verbunden ist und dazu konfiguriert ist, einen zweiten Abschnitt der Anzeige aufzunehmen; und
ein Scharniergehäuse, das zwischen dem ersten Gehäuse und dem zweiten Gehäuse angeordnet und dazu konfiguriert ist, das Scharnier aufzunehmen,
wobei die Trägerplatte mindestens einen Abschnitt des ersten Gehäuses bildet und wobei sich das Wärmeübertragungselement von dem ersten Gehäuse durch mindestens eines von dem Scharnier und dem Scharniergehäuse zu dem zweiten Gehäuse erstreckt.

15. Elektronische Vorrichtung nach einem vorhergehenden Anspruch, wobei sich die Öffnung der Trägerplatte von der zweiten Oberfläche der Trägerplatte zu der ersten Oberfläche der Trägerplatte erstreckt.

## Revendications

1. Dispositif électronique (101) comprenant :
une plaque de support (11) comprenant une première surface (111), une deuxième surface (112) opposée à la première surface, et une ouverture (113) formée dans la deuxième surface ;
un affichage (90) supporté au moins en partie par la première surface de la plaque de support ;
une batterie (30) supportée au moins en partie par la seconde surface de la plaque de support, la batterie comprenant une surface supérieure (31) faisant face à la seconde surface de la plaque de support ;
un diffuseur thermique (20) disposé entre l'affichage et la batterie de sorte qu'au moins une portion du diffuseur thermique soit logée dans l'ouverture de la plaque de support ;
**caractérisé par**,
un élément d'enveloppement (40) entourant au moins une portion de la batterie, l'élément d'enveloppement comprenant une première portion d'enveloppement (41) adhérant à la batterie et une seconde portion d'enveloppement (42) n'adhérant pas à la batterie ; et
un élément adhésif (50) faisant adhérer l'au moins une portion du diffuseur thermique à une première région de la seconde portion d'enveloppement.

2. Dispositif électronique selon la revendication 1, dans lequel au moins une portion de la première région de la seconde portion d'enveloppement est espacée de la surface supérieure de la batterie.

3. Dispositif électronique selon la revendication 1 ou 2, dans lequel une distance (G3) entre une surface inférieure de la deuxième portion d'enveloppement et la surface supérieure de la batterie est de 0,07 mm à 0,10 mm.

4. Dispositif électronique selon l'une quelconque revendication précédente, dans lequel une épaisseur (T) de l'élément adhésif est inférieure à une différence entre une épaisseur de l'élément d'enveloppement et une distance (G2) entre une surface inférieure du diffuseur thermique et la surface supérieure de la batterie.

5. Dispositif électronique selon l'une quelconque revendication précédente, dans lequel une épaisseur (T) de l'élément adhésif est sensiblement plus épaisse qu'une épaisseur (t) de l'élément d'enveloppement.

6. Dispositif électronique selon l'une quelconque revendication précédente, dans lequel l'élément d'enveloppement comprend une deuxième région disposée sur la surface supérieure de la batterie qui ne chevauche pas l'ouverture de la plaque de support.

7. Dispositif électronique selon la revendication 6, dans lequel le dispositif électronique comprend en outre un élément sous-adhésif conçu pour faire adhérer une région de la seconde surface de la plaque de support à la deuxième région de l'élément d'enveloppement, ou dans lequel la deuxième région de l'élément d'enveloppement n'adhère pas à la seconde surface de la plaque de support.

8. Dispositif électronique selon l'une quelconque revendication précédente, dans lequel
la batterie comprend en outre une surface inférieure opposée à la surface supérieure de la batterie et une surface latérale reliant la surface supérieure et la surface inférieure,
la plaque de support comprend en outre une paroi latérale intérieure s'étendant à partir de la seconde surface et entourant une portion de la surface latérale de la batterie,
l'élément d'enveloppement comprend une troisième région entourant au moins une portion de la surface latérale de la batterie, et
le dispositif électronique comprend en outre un élément adhésif supplémentaire conçu pour faire adhérer la troisième région de l'élément d'enveloppement à la paroi latérale interne de la plaque de support.

9. Dispositif électronique selon l'une quelconque des revendications 1 à 7, dans lequel la batterie comprend en outre une surface inférieure opposée à la surface supérieure de celle-ci et une surface latérale reliant la surface supérieure et la surface inférieure, la première portion d'enveloppement de l'élément d'enveloppement est disposée sur la surface inférieure, et la seconde portion d'enveloppement est disposée sur la surface supérieure et la surface latérale.

10. Dispositif électronique selon l'une quelconque des revendications revendication 1 à 7, dans lequel
la batterie comprend en outre une surface inférieure opposée à la surface supérieure de celle-ci et une surface latérale reliant la surface supérieure et la surface inférieure,
la première portion d'enveloppement de l'élément d'enveloppement s'étend depuis la surface inférieure à travers la surface latérale jusqu'à une portion de la surface supérieure qui ne chevauche pas l'ouverture, et la seconde portion d'enveloppement est placée sur une portion de la surface supérieure qui chevauche l'ouverture.

11. Dispositif électronique selon l'une quelconque revendication précédente, dans lequel l'élément adhésif comprend une première portion adhésive et une seconde portion adhésive espacée de la première portion adhésive dans une direction sensiblement parallèle à l'affichage.

12. Dispositif électronique selon l'une quelconque revendication précédente, comprenant en outre :
un processeur ;
dans lequel, vu du haut de l'affichage, le diffuseur thermique comprend une première portion de diffusion thermique placée pour chevaucher le processeur et une seconde portion de diffusion thermique conçue pour s'étendre à partir de la première portion de diffusion thermique pour chevaucher la batterie, et
dans lequel la seconde portion de diffusion thermique forme l'au moins une portion du diffuseur thermique logée à l'intérieur de l'ouverture de la plaque de support.

13. Dispositif électronique selon l'une quelconque revendication précédente, comprenant en outre : un élément de transfert thermique disposé entre l'affichage et le diffuseur thermique, dans lequel une zone de l'élément de transfert thermique est sensiblement plus petite qu'une zone de l'affichage et est sensiblement plus grande qu'une zone du diffuseur thermique.

14. Dispositif électronique selon la revendication 13, comprenant en outre :
une charnière ;
un premier boîtier conçu pour loger une première portion de l'affichage ;
un second boîtier relié de manière rotative au premier boîtier par la charnière et conçu pour recevoir une seconde portion de l'affichage ; et
un boîtier de charnière disposé entre le premier boîtier et le second boîtier et conçu pour loger la charnière,
dans lequel la plaque de support forme au moins une portion du premier boîtier, et
dans lequel l'élément de transfert thermique s'étend depuis le premier boîtier à travers au moins l'une de la charnière et du boîtier de charnière jusqu'au second boîtier.

15. Dispositif électronique selon l'une quelconque revendication précédente, dans lequel l'ouverture de la plaque de support s'étend de la seconde surface de la plaque de support à la première surface de la plaque de support.
